# EUROPEAN PATENT SPECIFICATION

(11) **EP 2 899 078 B1**
(45) Date of publication and mention of the grant of the patent: **07.09.2016**
(21) Application number: 14152365.4
(22) Date of filing: 24.01.2014
(51) Int. Cl.: B60S 1/40, B60S 1/38

(54) **Multifunctional windshield wiper connection structure**
Multifunktionale Scheibenwischerverbindungsstruktur
Structure de connexion d'essuie-glace multifonctionnel

(43) Date of publication of application: 29.07.2015
(73) Proprietor: Fu Gang Co., Ltd., 268 Yilan County (TW)
(72) Inventor: Chiang, Min-Heng, Cambridge, CB1 1AH (GB)
(74) Representative: Horak, Michael

(56) References cited:
- EP-A1- 2 360 070
- EP-A2- 1 995 130
- EP-A2- 2 465 739
- DE-U1-202012 102 614

## Description

### (a) Technical Field of the Invention

The present invention relates to a multifunctional windshield wiper connection structure, and more particularly to a multifunctional windshield wiper connection structure through which a windshield wiper is able to be coupled to different kinds of windshield wiper arms.

### (b) Description of the Prior Art

A general connection manner of a windshield wiper to a windshield wiper arm is fixing a positioning frame to a spring sheet of the windshield wiper at the center thereof and then configuring a retaining seat on the positioning frame, thereby allowing the retaining seat to be connected with the windshield wiper arm. Because such kind of conventional retaining seat need further be collocated with a connection head and is suitable for use in specific classifications of vehicles; different classifications of vehicles need be assembled with different retaining seats, causing vehicle owners much trouble upon windshield wiper installment, higher labor cost, time consumption and increased stocks cost to proprietors during the installment because of a variety of products. EP-A-2465739 is an example of the prior art.

### SUMMARY OF THE INVENTION

The main object of the present invention is to provide a multifunctional windshield wiper connection structure for a windshield wiper to be able to be coupled to different kinds of windshield wiper arms, allowing the same multifunctional windshield wiper connection structure to be suitable for use on different windshield wiper arms.

To achieve the above object, the present invention proposes a multifunctional windshield wiper connection structure, including a main seat 1, and components, such as a front cover 2, back cover 3, hole cover 4, buckling element 5, which are assembled on the main seat 1, and can be detached from the main seat 1, where the main seat 1 at least includes clamping portions 20 on the two side thereof and a vertical buckling bar 21 configured on the bottom edge thereof, allowing the main seat 1 to be fixed on a retaining seat 61 of a windshield wiper 6 through the clamping portions 20 and buckling bar 21. Whereby, the component(s) such as the front cover 2 and/or back cover 3 and/or hole cover 4 and/or buckling element 5 can be detached or recombined after the detachment according to different types of windshield wiper arms to provide the connection between different types of windshield wiper arms and the windshield wiper 6, allowing the same multifunctional windshield wiper connection structure to be suitable for use on different windshield wiper arms, thereby achieving a multiuse object.

### BRIEF DESCRIPTION OF THE DRAWINGS

The present invention can be more fully understood by reference to the following description and accompanying drawings, in which:
FIG 1 is a perspective view of a first windshield wiper arm;
FIG 2 is a perspective view of a second windshield wiper arm;
FIG 3 is a perspective view of a third windshield wiper arm;
FIG 4 is a perspective view of a fourth windshield wiper arm;
FIGS. 5A and 5B are perspective views of a fifth windshield wiper arm;
FIGS. 6A and 6B are perspective views of a sixth windshield wiper arm;
FIGS. 7A and 7B respectively are a perspective view and bottom view of a main seat according to the present invention;
FIGS. 8A and 8B respectively are a perspective view and bottom view of a front cover according to the present invention;
FIGS. 9A and 9B respectively are a perspective view and bottom view of a back cover according to the present invention;
FIGS. 10A and 10B respectively are a perspective view and front view of a hole cover according to the present invention;
FIGS. 11A and 11B respectively are a perspective view and bottom view of a buckling element according to the present invention;
FIG. 12 is a perspective view of the present invention;
FIG 13 is an exploded view of the present invention;
FIG 14 and 15 are a perspective view of a first windshield wiper arm assembling state according to the present invention;
FIGS. 16 and 17 are a perspective view of a second windshield wiper arm assembling state according to the present invention;
FIGS. 18 and 19 are a perspective view of a third windshield wiper arm assembling state according to the present invention;
FIGS. 20 and 21 are a perspective view of a fourth windshield wiper arm assembling state according to the present invention;
FIGS. 22 and 23 are a perspective view of a fifth windshield wiper arm assembling state according to the present invention; and
FIGS. 24 and 25 are a perspective view of a sixth windshield wiper arm assembling state according to the present invention;

### DETAILED DESCRIPTION OF THE PREFERRED EMBODIMENTS

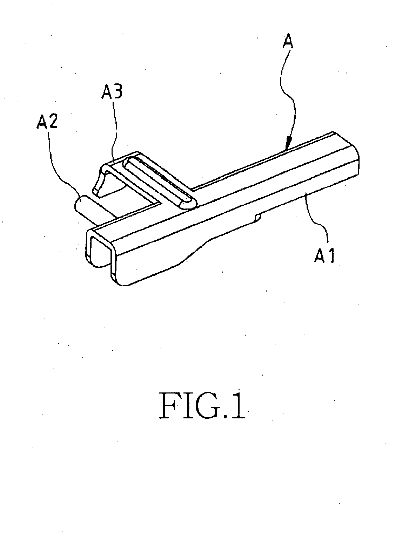

The present invention mainly designs a connection structure capable of being shared by a variety of general windshield wiper arms. To understand the objects of the present invention clearly, the structures of general currently-used windshield wiper arms are described as the following. Referring to FIG 1, which is a perspective and side view of a first windshield wiper arm, a windshield wiper arm A includes an approximately " 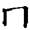 "-shaped rod A1 with a fixing bar A2 on an end portion thereof, where a buckling bar A3 positioned above the fixing bar A2 is configured on the upper edge of the rod A1, allowing one end portion of the buckling bar A3 to be bended downward vertically.

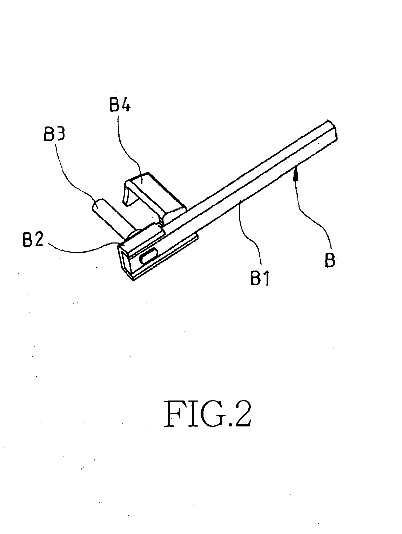

Referring to FIG 2, which is a perspective view of a second windshield wiper arm, a second windshield wiper arm B includes a rod B1 with a frame portion B2 covered on one end portion thereof, where a fixing bar B3 is configured on the frame portion B2, and a buckling bar B4 positioned above the fixing bar B 3 is configured on the upper edge of the rod B1, allowing one end portion of the buckling bar B 4 to be bended downward vertically.

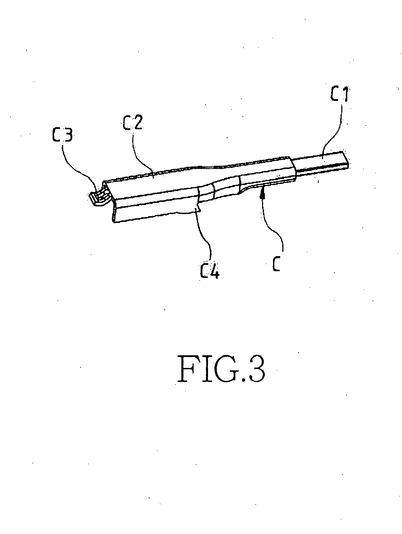

Referring to FIG 3, which is a perspective view of a third windshield wiper arm, a third windshield wiper arm C includes a rod C1 with a gradually widened and " 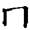 "-shaped framing portion C2 configured on one end portion thereof, where a fastening hook C3 is configured on the upper edge of the front end of the framing portion C2, allowing the front end of the fastening hook C3 to be curved slightly, and a pointed hooking portion C4 is further configured on the bottom edge of the framing portion C2.

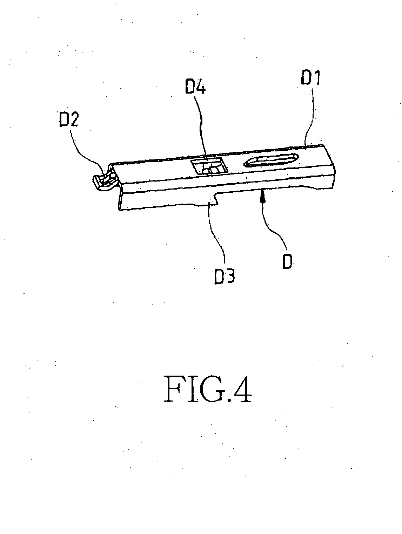

Referring to FIG 4, which is a perspective view of a fourth windshield wiper arm, a fourth windshield wiper arm D includes a rectangular and " 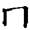 "-shaped framing portion D1 with a fastening hook D2 configured on the upper edge of the front end of the framing portion D1, allowing the front end of the fastening hook D2 to be curved slightly, a pointed hooking portion D3 is configured on the bottom edge of the framing portion D1, and an opening D4 is further configured on the surface of the framing portion D1.

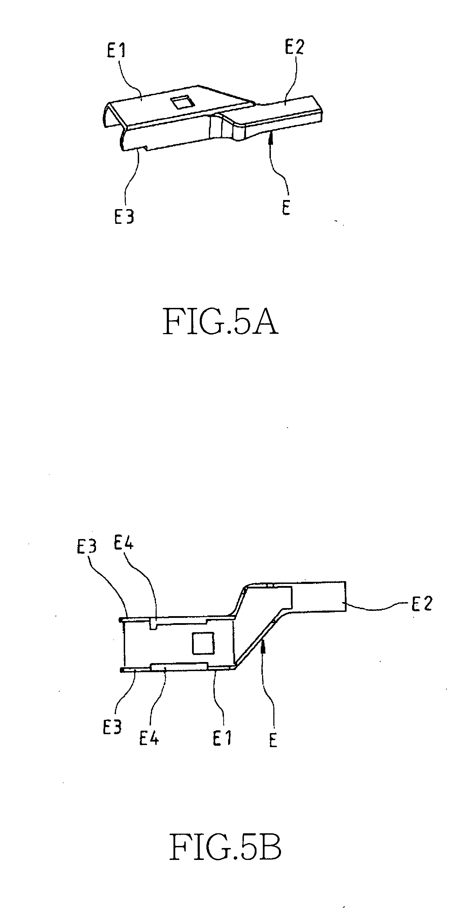

Referring to FIGS. 5A and 5B, which are a perspective view of a fifth windshield wiper arm, a fifth windshield wiper arm E includes a " 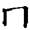 "-shaped framing portion E1 bended slightly at the rear end thereof and connected to a proper length of extension portion E2, where a step E3 is configured on the bottom edge of the front end of the framing portion E1, and an engagement portion E4 bended inward levelly is respectively configured on the two sides of the framing portion E1 behind the step E3.

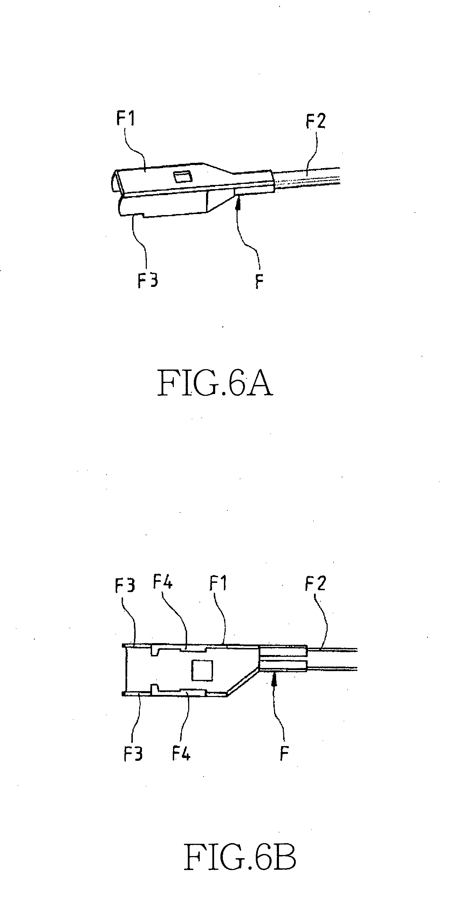

Referring to FIGS. 6A and 6B, which are a perspective view of a sixth windshield wiper arm, a sixth windshield wiper arm F includes a " 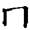 "-shaped framing portion F1 contracted inward obliquely at the rear end thereof and connected to a rod F2, where a step F3 is configured on the bottom edge of the front end of the framing portion F1, and an engagement portion F4 bended inward levelly is respectively configured on the two sides behind the step F3

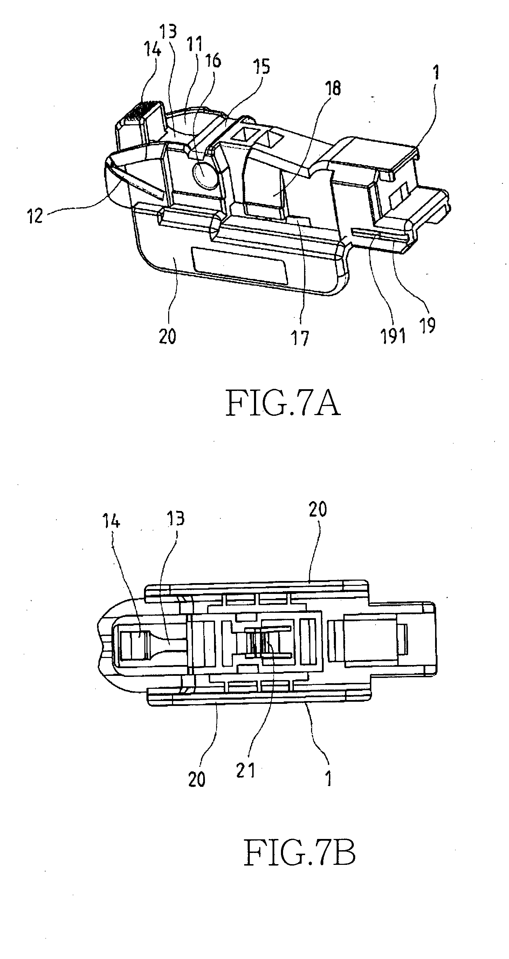

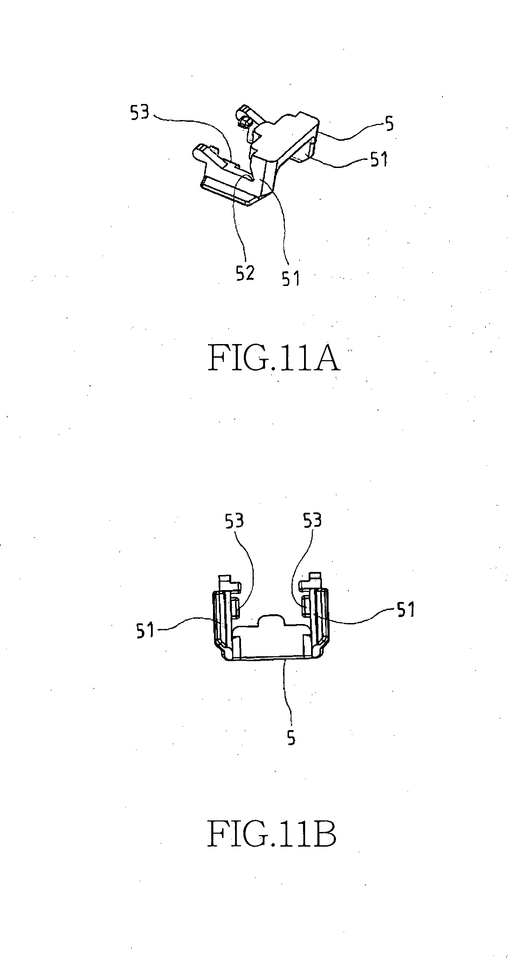

Referring to FIGS. 7A to 11B, a multifunctional windshield wiper connection structure of the present invention mainly includes a main seat 1, front cover 2, back cover 3, hole cover 4 and buckling element 5. The main seat 1, as shown in FIGS. 7A and 7B, which respectively are a perspective view and bottom view, is configured with a cross hole 11 on the front end thereof, where a symmetrical sliding groove 12 extended obliquely inward is respectively configured on the two sides of the cross hole 11, and a suspension sheet 13 with a engagement hook 14 of proper elasticity at the front end thereof connected to the main seat 1 is configured in the cross hole 11. In addition, a groove 15 is configured behind the cross hole 11, and a fixing hole 16 passed through the main seat 1 is configured on the two sides thereof below the groove 15. Furthermore, a sliding groove 17 is configured behind the fixing hole 16, and a positioning portion 18 embossed obliquely from top to bottom is configured above the sliding groove 17. Furthermore, a symmetrical buckling channel 19 is respectively configured on the two sides of the rear edge of the main seat 1, where a step 191 is configured on a proper position of the buckling channel 19, allowing the buckling channel 19 to form a height drop. Furthermore, the two sides of the bottom edges of the main seat 1 is projected outward levelly slightly, thereby to form a symmetrical clamping portion 20, and a vertical buckling bar 21 is configured on a proper position of the center of the bottom edge.

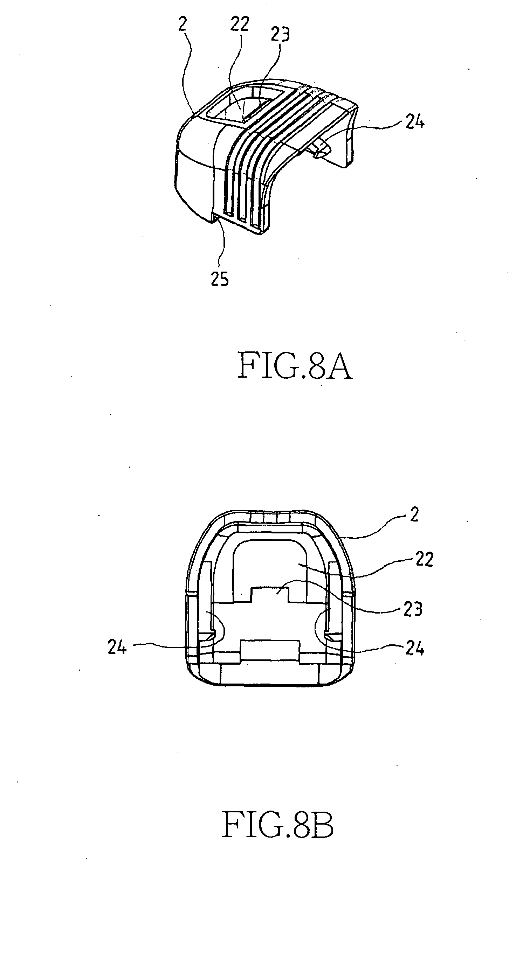

Referring to FIGS. 8A and 8B, which respectively are a perspective view and bottom view of a front cover according to the present invention, the front cover 2 of the present invention is configured with an opening 22 on the upper edge thereof, where a buckling hook 23 is configured on the opening 22. Furthermore, an inclined projecting rib 24 is respectively configured on the two sides of the internal vertical face of the front cover 2, and a step 25 the two sides of the bottom edge thereof, allowing the front cover 2 to be fixed to the front end of the main seat 1 by buckling the buckling hook 23 with the engagement hook 14 and by means of the positioning of the step 25 after the projecting ribs 24 are engaged with the sliding grooves 12 of the main seat 1.

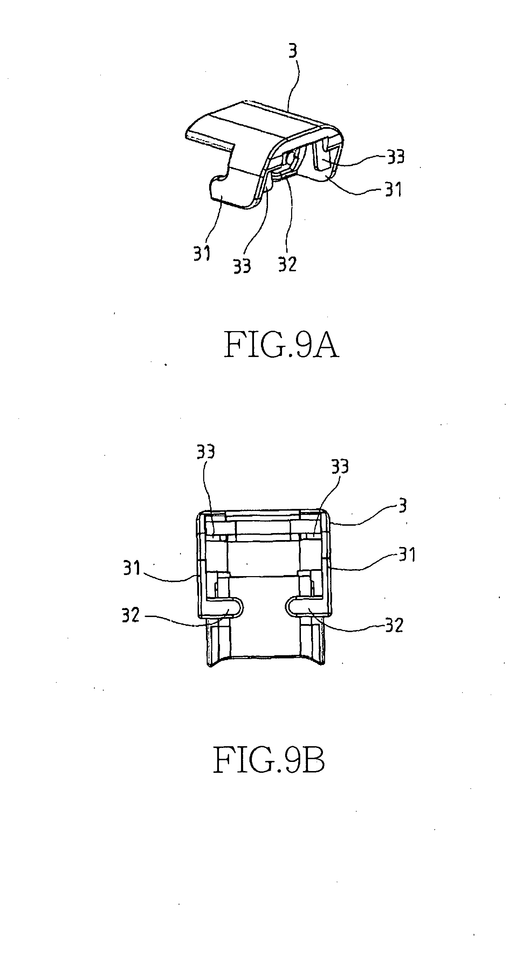

Referring to FIGS. 9A and 9B, which respectively are a perspective view and bottom view of the back cover, the back cover 3 of the present invention is a " 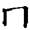 "-shaped frame, and a vertical portion 31 thereof is extended forward obliquely from top to bottom, where the bottom edge of the vertical portion 31 is formed into symmetrical inlaying sheets 32 after being bended inward levelly. Furthermore, two symmetrical blocking sheets 33 are configured on the rear side of the internal face of the back cover 3, allowing the back cover 3 to be positioned on the main seat 1 by the blocking sheet 33 and the embossed positioning portion 18 after the inlaying sheets 32 are inserted in the sliding grooves 17 and moved along the sliding groove 17 back and forth..

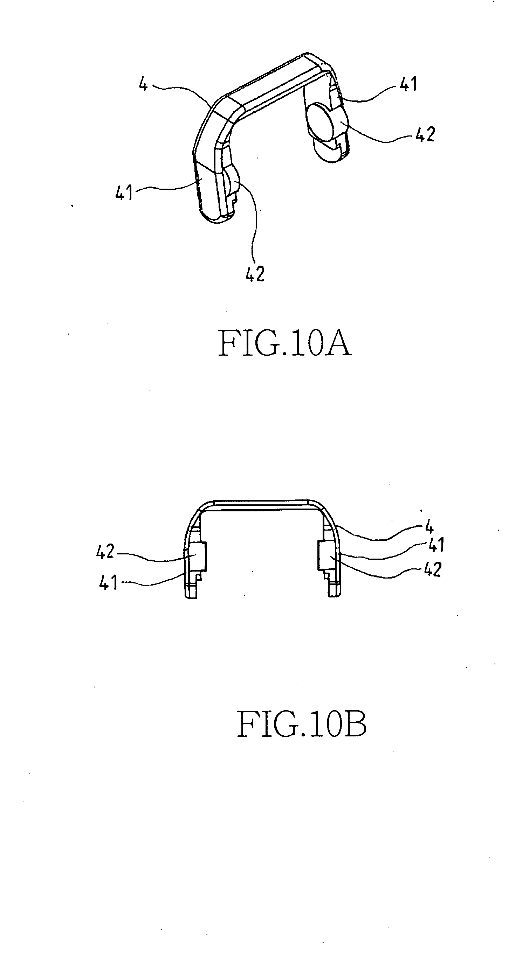

Referring to FIGS. 10A and 10B, which respectively are a perspective view and front view of the hole cover, the hole cover 4 of the present invention is a " 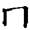 "-shaped frame, and a vertical section 41 thereof is configured with a circular projecting mass 42 corresponding to the fixing hole 16 of the main seat 1, allowing the hole cover 4 to be embedded in the groove 15 of the main seat 1 exactly, and the circular projecting mass 42 to be inserted in the fixing hole 16 exactly.

Referring to FIGS. 11A and 11B, which respectively are a perspective view and bottom view of the buckling element, the buckling element 5 is a " 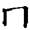 "-shaped body, and a concave engagement portion 52 is formed on a bended section after a vertical section 51 is extended forward a proper length. Furthermore, the front of the extension section is raised slightly, and a symmetrical rib 53 is configured on the internal face of the extension section, allowing the buckling element 5 to be slid along the buckling channel 19 of the main seat 1 by inserting the rib 53 in the buckling channel 19, and fixed on the rear side of the main seat 1 through the positioning of the step 191 configured on the buckling channel 19.

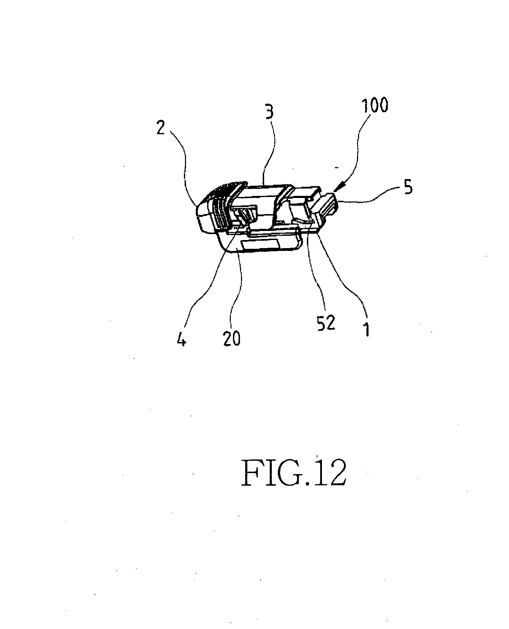

Referring to FIG 12, which is a perspective view of the present invention, the front cover 2, back cover 3, hole cover 4 and buckling element 5 are respectively fixed on the front, rear and upper sides of the main seat 1 after the components mentioned above are assembled together to form a multifunctional windshield wiper connection structure 100, thereby allowing the installment thereof on a windshield wiper. Furthermore, some components may be detached from the connection structure 100, or recombined after the detachment according to different types of windshield wiper arms upon use so as to allow different types of windshield wiper arms to be able to be coupled to a windshield wiper, and the same multiple windshield wiper connection structure 100 can be used on different types of windshield wiper arms, thereby achieving the object of multifunctional use.

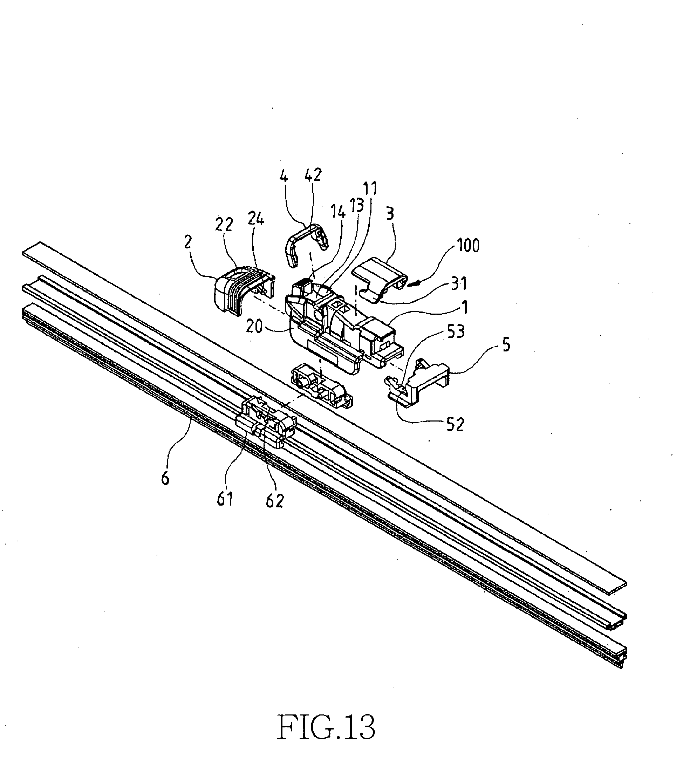

Referring to FIG 13, which is an exploded view of the present invention, upon the assembly of the present invention, the main seat 1 is first fixed to a retaining seat 61 of a windshield wiper 6, where the clamping portions 20 configured on the bottom edge of the main seat 1 is clamped on the two sides of the retaining seat 61, and the buckling bar 21 at the center of the bottom edge of the main seat 1 is passed through a retaining hole 62 on the upper side of the retaining seat 61 upon installment. Thus, the back cover 3, hole cover 4 and buckling element 5 are detached or recombined after the detachment according different requirements so as to allow different types of windshield wiper arms to be fixed to the multifunctional windshield wiper connection structure 100, thereby broadening the use scope of the multifunction windshield wiper connection structure 100, and solving the problem generated from the conventional windshield wiper that a different classification of car needs a specific connection structure.

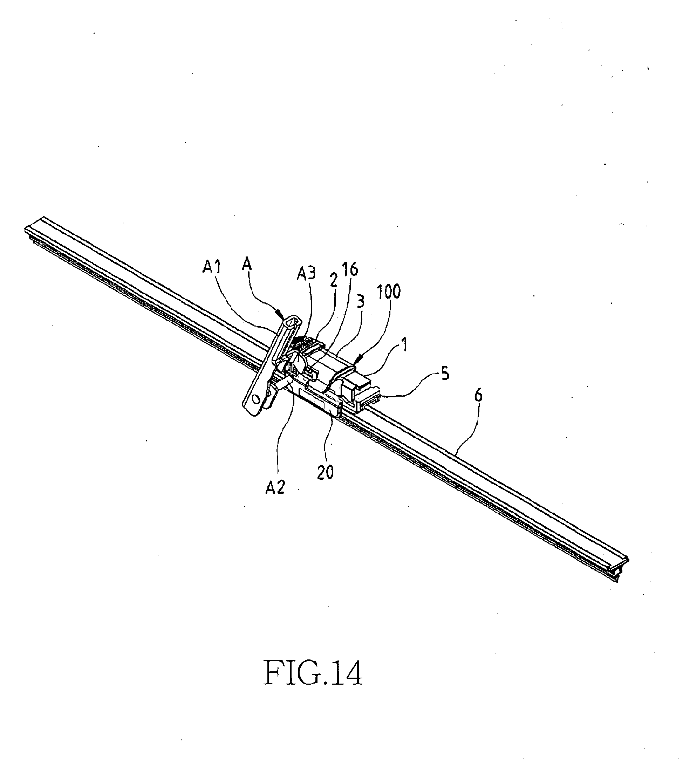

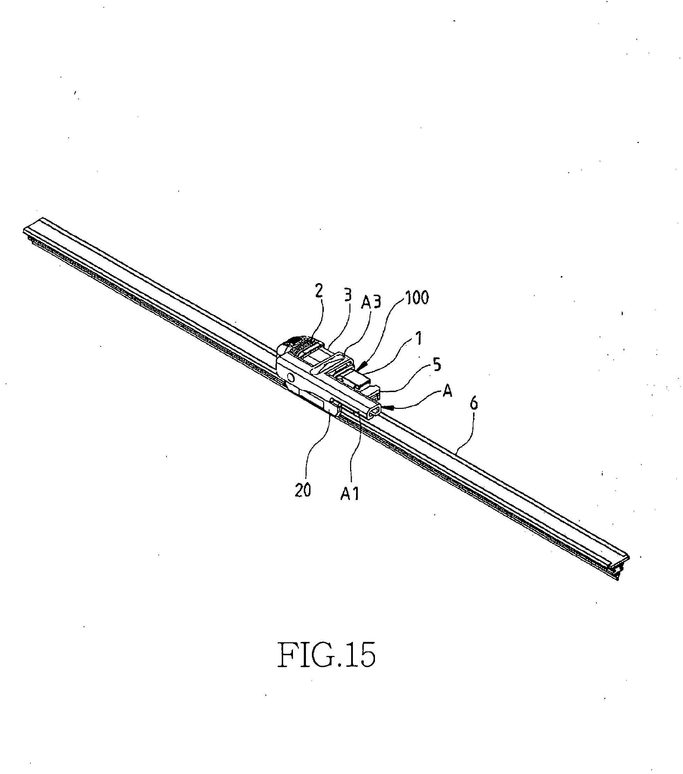

Referring to FIGS. 14 and 15, which are perspective views of a first windshield wiper arm assembling state according to the present invention, the " assembled hole cover 4 is first detached from the main seat 1 when the present invention is applied on the first windshield wiper arm A, as FIG 13 shows, allowing the fixing hole 16 of the main seat 1 to be exposed to the outside, thereby passing the fixing bar A2 of the first windshield wiper arm A through the fixing hole 16, and buckling the buckling bar A3 configured on the upper edge of the rod A1 with the upper and lateral sides of the back cover 3 so that the first windshield wiper arm A can be fixed to the multifunctional wiper connection structure 100.

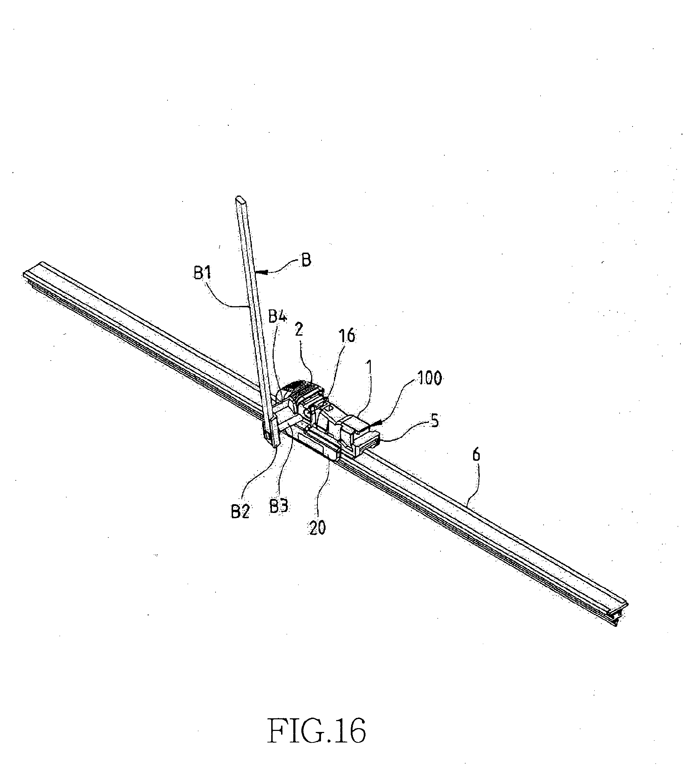

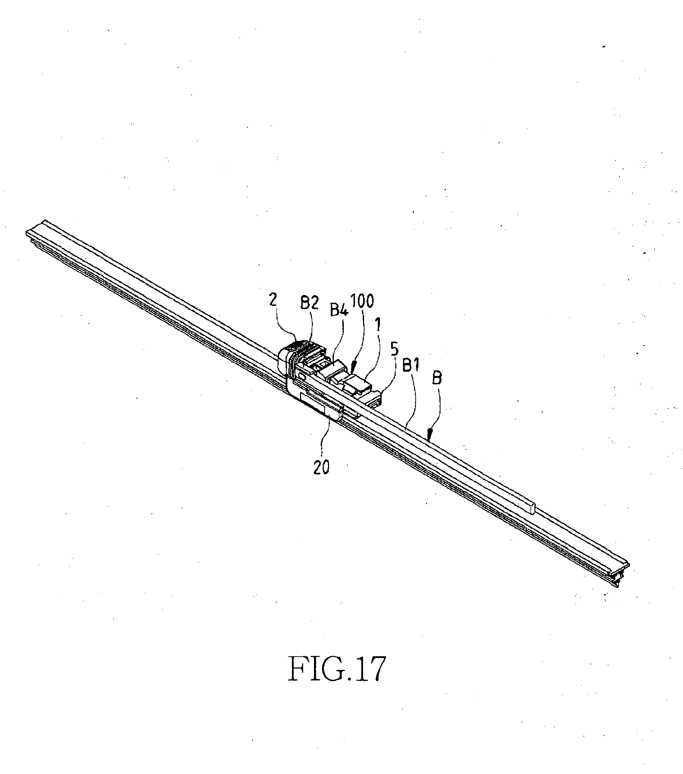

Referring to FIGS. 16 and 17, which are perspective views of a second windshield wiper arm assembling state according to the present invention, the assembled hole cover 4 and back cover 3 are detached from the main seat 1 when the present invention is applied on the second windshield wiper arm B, allowing the fixing hole 16 of the main seat 1 to be exposed to the outside, thereby passing the fixing bar B3 of the second windshield wiper arm B through the fixing hole 16 and buckling the buckling bar B4 configured on the upper edge of the rod B1 with the upper and lateral sides of the main seat 1 so that the second windshield wiper arm B can be fixed to the multifunctional wiper connection structure 100.

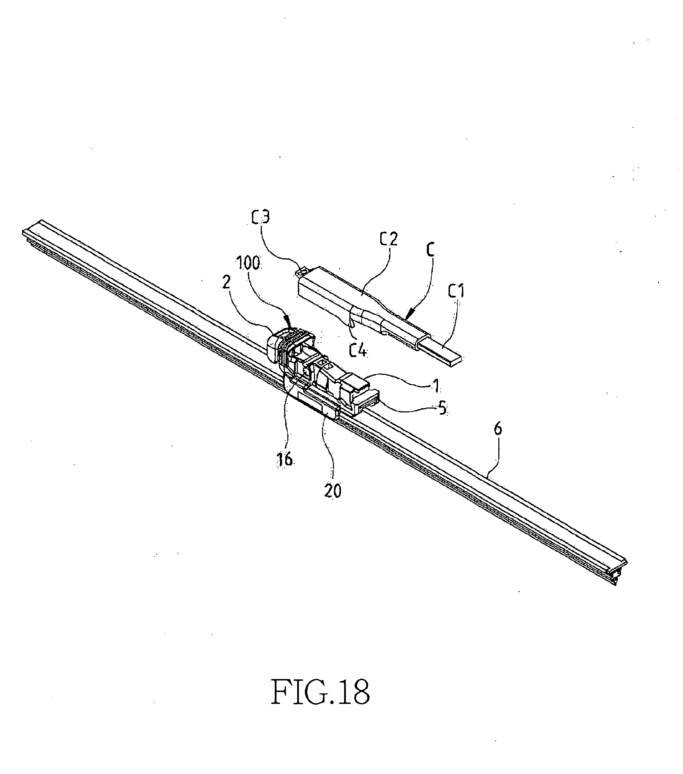

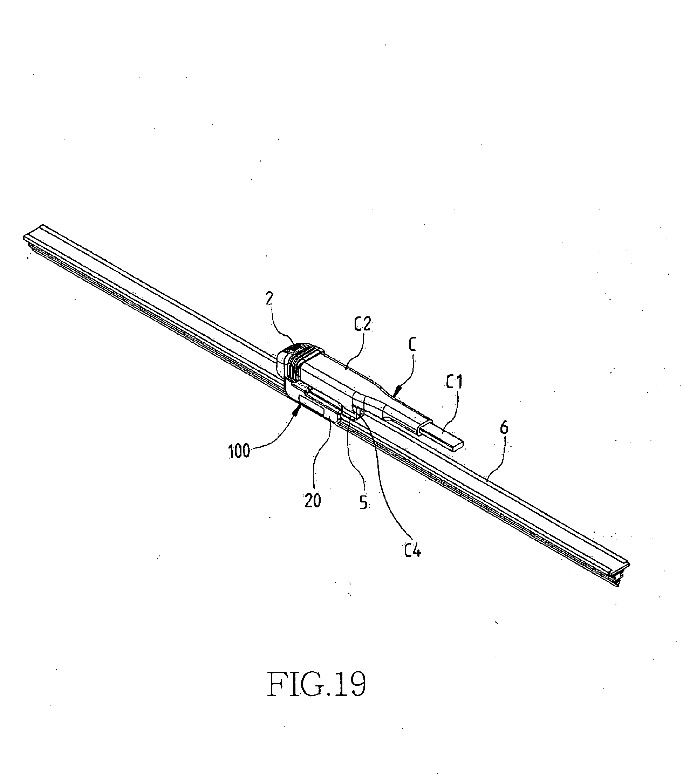

Referring to FIGS. 18 and 19, which are perspective views of a third windshield wiper arm assembling state according to the present invention, the assembled hole cover 4 and back cover 3 are detached from the main seat 1 when the present invention is applied on the third windshield wiper arm C, allowing the fastening hook C3 configured on the front end of the framing portion C2 of the third windshield wiper arm C to be fastened to the front cover 2, and the pointed hooking portion C4 configured on the bottom edge of the framing portion C2 to be engaged with the engagement portion 52 of the buckling element 5; the fastening hook C3 can be fastened to the front cover 2 tightly due to the positioning of the hooking portion C4 because the front end of the fastening hook C3 is curved slightly so that the third windshield wiper arm C can be fixed to the multifunctional wiper connection structure 100.

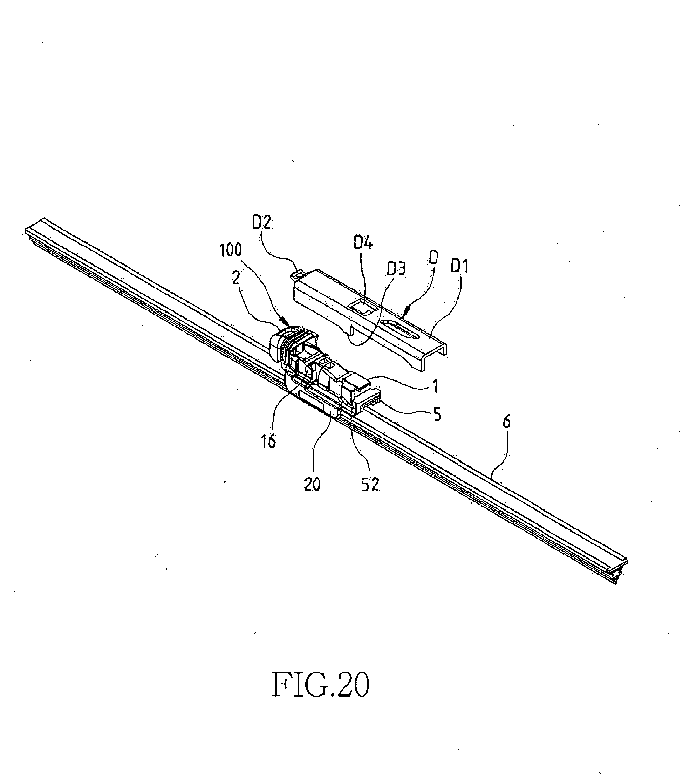

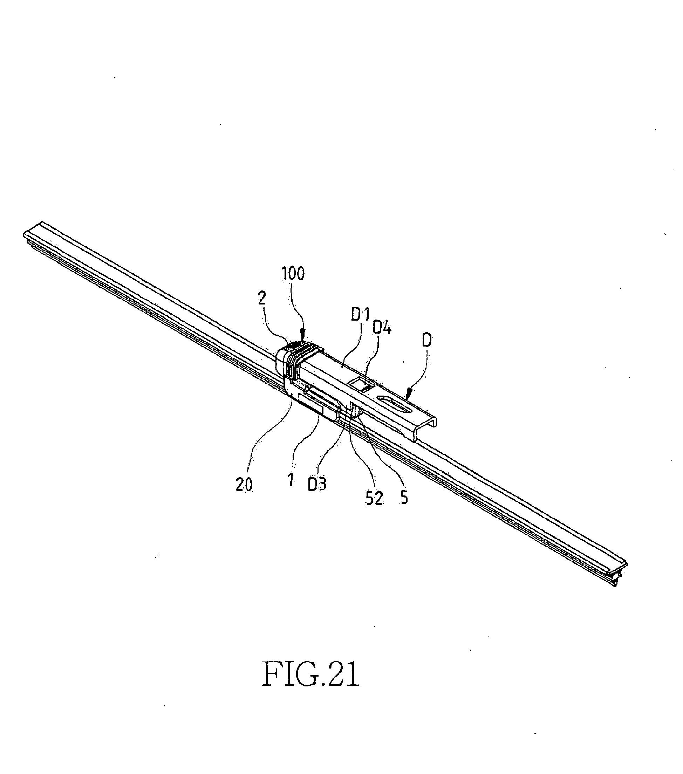

Referring to FIGS. 20 and 21, which are perspective views of a fourth windshield wiper arm assembling state according to the present invention, the assembled hole cover 4 and back cover 3 are detached from the main seat 1 when the present invention is applied on the fourth windshield wiper arm C, allowing the fastening hook D2 configured on the front end of the framing portion D1 of the fourth windshield wiper arm D to be fastened to the front cover 2, the opening D4 to be buckled with the upper edge of the main seat 1, and the pointed hooking portion D3 configured on the bottom edge of the framing portion D1 to be engaged with the engagement portion 52 of the buckling element 5; the fastening hook D2 can be fastened to the front cover 2 tightly due to the positioning of the hooking portion D3 because the front end of the fastening hook D3 is curved slightly so that the fourth windshield wiper arm D can be fixed to the multifunctional wiper connection structure 100.

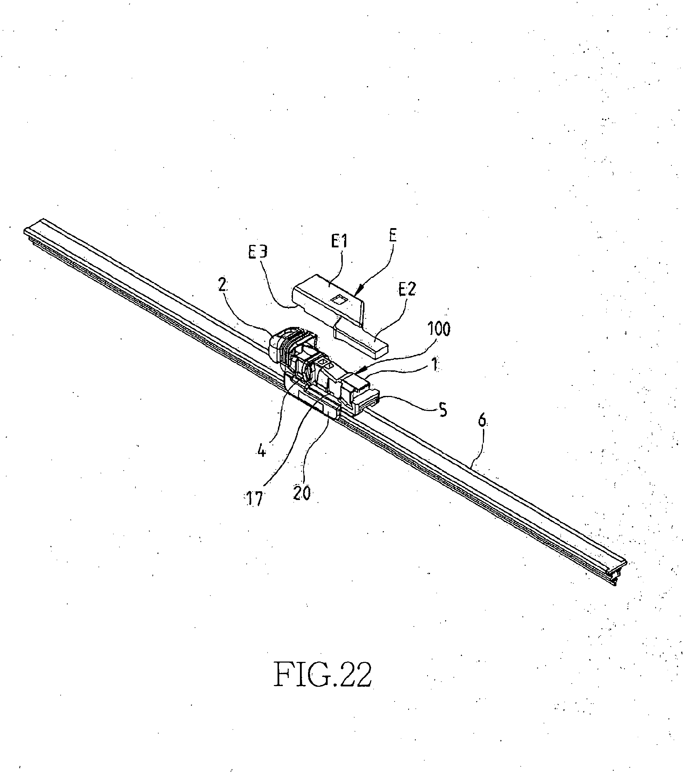

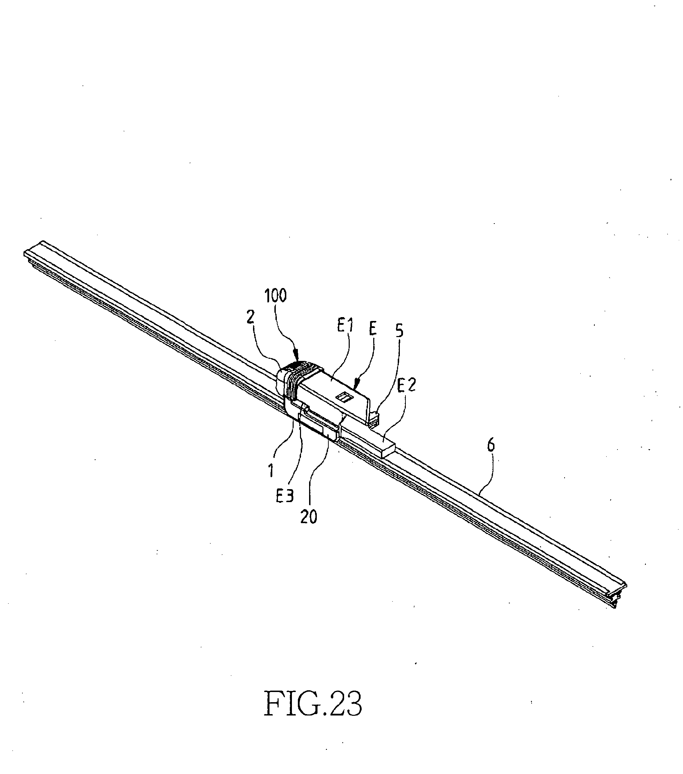

Referring to FIGS. 22 and 23, which are perspective views of a fifth windshield wiper arm assembling state according to the present invention, the assembled back cover 3 is detached from the main seat 1 when the present invention is applied on the fifth windshield wiper arm E, allowing the framing portion E1 of the fifth windshield wiper arm E to be engaged with the main seat 1, the positioning thereof is formed by the step E3 configured on the bottom edge of the front end of the framing portion E1, and the engagement portion E4 is engaged with the sliding groove 17 of the main seat 1 so that the fifth windshield wiper arm E can be fixed to the multifunctional wiper connection structure 100.

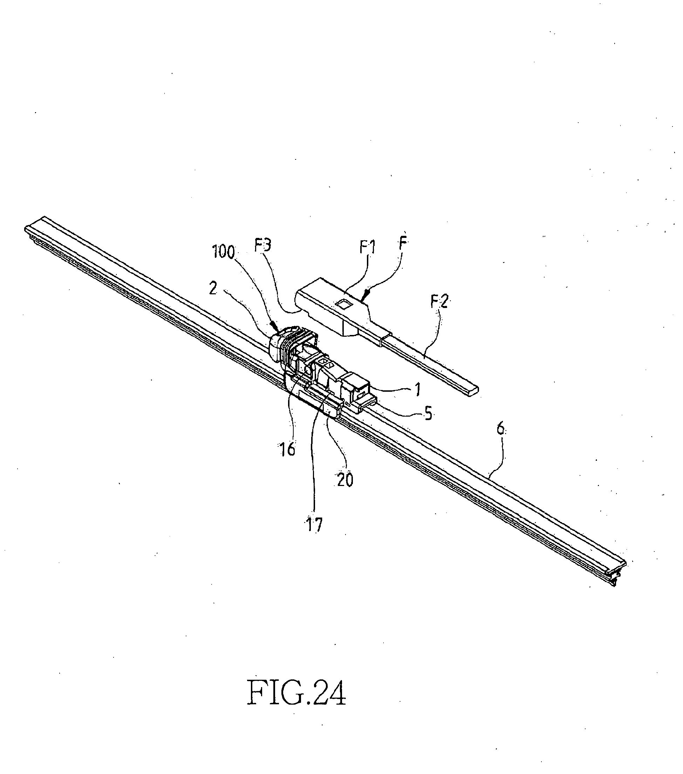

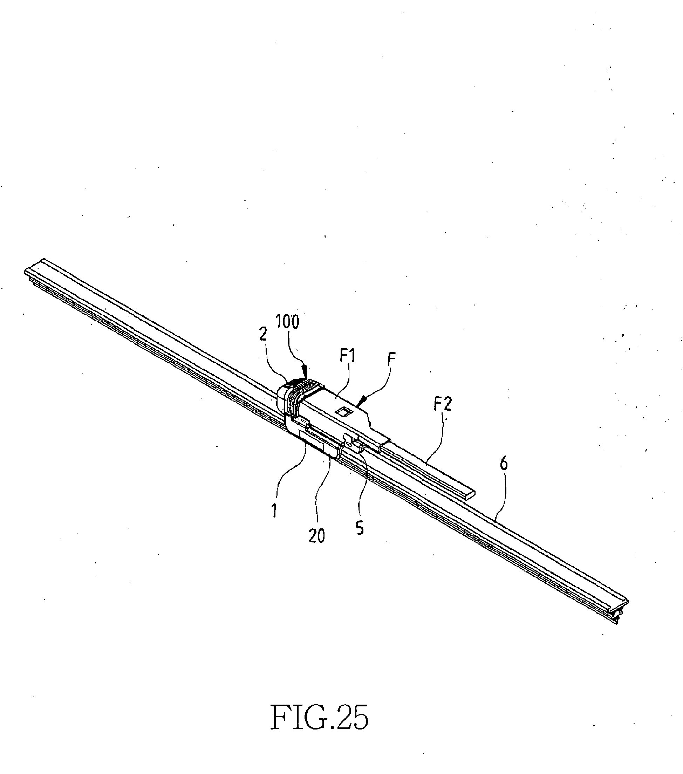

Referring to FIGS. 24 and 25, which are perspective views of a sixth windshield wiper arm assembling state according to the present invention, the assembled back cover 3, hole cover 4 and buckling element 5 are detached from the main seat 1 when the present invention is applied on the fifth windshield wiper arm E, allowing the framing portion F1 of the sixth windshield wiper arm F to be engaged with the main seat 1, the positioning thereof is formed by the step F3 configured on the bottom edge of the front end of the framing portion F1, and the engagement portion F4 is engaged with the sliding groove 17 of the main seat 1 so that the sixth windshield wiper arm F can be fixed to the multifunctional wiper connection structure 100.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims and their equivalents.

To sum up, the present invention uses the main seat matching with the components such as the front cover, back cover, hole cover and buckling element to form a multiftinctional windshield wiper connection structure, allowing the single connection structure to be suitable for use on different types of windshield wiper arms. Therefore, the present invention is a practical and novelty design.

## Claims

1. A multifunctional windshield wiper connection structure, comprising:
a main seat (1), configured with a cross hole (11) on a front end thereof, a symmetrical sliding groove (12) extended obliquely inward being respectively configured on two sides of said cross hole (11),
a groove (15) being configured behind said cross hole (11), a fixing hole (16) passed through the main seat (1) being configured on two sides thereof below said groove (15), a sliding groove (17) being configured behind said fixing hole (16), a symmetrical buckling channel (19) being respectively configured on two sides of a rear edge of said main seat (1), a clamping portion (20) being configure on a bottom edge of said main seat (1), and a buckling bar 21 for the fixation thereof to a retaining seat (61) of a windshield wiper (6) being configured on a proper position of a center of said bottom edge;
a front cover (2), configured with an inclined projecting rib (24) respectively positioned on two sides of an internal face thereof, said front cover (2) being fixed to a front end of said main seat (1) after said projecting rib (24) is engaged with said sliding groove (12) and slid inward;
a back cover (3), being a " 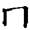 "-shaped frame, a bottom edge of a vertical portion (31) thereof being bended inward levelly to form symmetrical inlaying sheets (32), said back cover (3) being fixed on a upper side of said main seat (1) by inserting the inlaying sheets (32) into said sliding groove (17) of said main seat (1);
a hole cover (4), being a " 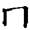 "-shaped frame, a vertical section (41) thereof being configured with a circular projecting mass (42) corresponding to said fixing hole (16) of said main seat (1), allowing said hole cover (4) to be embedded in said groove (15) of said main seat (1) exactly, and said circular projecting mass (42) to be inserted in said fixing hole (16) exactly; and
a buckling element (5), being a " 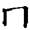 "-shaped body, and a concave engagement portion (52) being formed on a bended section after a vertical section (51) is extended forward a proper length, a symmetrical rib (53) being configured on a respective internal face of said extension section, said buckling element (5) being fixed on a rear side of said main seat (1) by inserting said rib (53) in said buckling channel (19);
whereby, some of said components are detached from said connection structure, or recombined after the detachment according to different types of windshield wiper arms upon use so as to allow different types of windshield wiper arms to be able to be coupled to a windshield wiper, and the same multiple windshield wiper connection structure is capable of being used on different windshield wiper arms.

2. The connection structure according to claim 1, wherein an elastic engagement hook (14) is configured on a front of said cross hole (11) of said main seat (1), and an opening (22) an upper edge of said front cover (2), wherein a buckling hook (23) is configured on said opening (2), allowing said front cover (2) to be positioned by buckling said buckling hook (23) with said engagement hook (14) after said projecting ribs (24) is engaged with said sliding groove (12).

3. The connection structure according to claim 1, wherein a step (25) is configured on a bottom edge of said front cover (2), allowing said front cover (2) to be positioned through said step (25) while being fixed to said front end of said main seat (1).

4. The connection structure according to claim 1, wherein an embossed positioning portion (18) is configured on said main seat (1) above each said sliding groove (17), and symmetrical blocking sheets (33) are configured on an inner edge at a rear side of said back cover (3), allowing said inlaying sheet (32) of said back cover (3) to be positioned through said blocking sheet (33) and corresponding embossed positioning portion (18) while being inserted in said corresponding sliding groove (17).

5. The connection structure according to claim 1, wherein a step (191) is configured on a proper position of buckling channel (19) on each side of a rear edge of said main seat (1), allowing said buckling element (5) to be positioned through said step (191) configured on said buckling channel (19) when said rib (53) is inserted in said buckling channel (19).

## Patentansprüche

1. Multifunktionale Scheibenwischer-Verbindungsstruktur mit:
einer Hauptaufnahme (1), die mit einer Querbohrung (11) an einem Vorderende davon konfiguriert ist, einer symmetrischen Gleitnut (12), die schräg nach innen erweitert ist bzw. an zwei Seiten der Querbohrung (11) konfiguriert ist, einer Nut (15), die hinter der Querbohrung (11) konfiguriert ist, einem Befestigungsloch (16), das die Hauptaufnahme (1) durchquert und an zwei Seiten davon unter der Nut (15) konfiguriert ist, einer Gleitnut (17), die hinter dem Befestigungsloch (16) konfiguriert ist, wobei ein symmetrischer Knickkanal (19) an je zwei Seiten einer Hinterkante der Hauptaufnahme (1) konfiguriert ist, wobei ein Klemmabschnitt (20) auf einer Bodenkante der Hauptaufnahme (1) konfiguriert ist und ein Knickstab 21 für dessen Befestigung an einem Haltesitz (61) eines Scheibenwischers (6) in einer geeigneten Position einer Mitte der Bodenkante konfiguriert ist;
einer vorderen Abdeckung (2), die mit einer geneigten vorstehenden Rippe (24) konfiguriert ist, die an je zwei Seiten einer Innenfläche davon positioniert ist, wobei die vordere Abdeckung (2) an einem Vorderende der Hauptaufnahme (1) befestigt wird, nachdem die vorstehenden Rippe (24) in die Gleitnut (12) eingreift und nach innen gleitet;
einer hinteren Abdeckung (3) als "Π"-förmiger Rahmen, wobei eine Bodenkante eines senkrechten Teils (31) davon eben nach innen gebogen ist, um symmetrische Einlegebleche (32) zu bilden, wobei die hintere Abdeckung (3) auf einer Oberseite des Hauptsitzes (1) befestigt ist, durch Einfügung der Einlegebleche (32) in die Gleitnut (17) des Hauptsitzes (1);
einer Lochabdeckung (4) als "Π"-förmiger Rahmen, wobei ein senkrechter Schnitt (41) davon mit einer runden vorstehenden Masse (42) konfiguriert ist, die dem Befestigungsloch (16) des Hauptsitzes (1) entspricht, so dass die Lochabdeckung (4) in die Nut (15) des Hauptsitzes (1) genau eingebettet werden kann und besagte runde vorstehende Masse (42) genau in das Befestigungsloch (16) eingefügt werden kann; und
einem Knickelement (5) als "Π"-förmiger Körper und einem konkaven Eingriffteil (52) auf einen gebogenen Abschnitt nachdem ein senkrechter Schnitt (51) vorwärts um eine geeignete Länge erweitert wird, wobei eine symmetrische Rippe (53) auf einer Innenfläche des Erweiterungsabschnitts konfiguriert ist, wobei das Knickelement (5) auf einer Rückseite des Hauptsitzes (1) befestigt wird, indem man die Rippe (53) in den Knickkanal (19) einfügt;
wodurch einige der Bestandteile von der Verbindungsstruktur abgelöst werden,
oder nach der Ablösung je nach verschiedenen Arten von Scheibenwischerarmen zur Verwendung neu kombiniert werden, damit verschiedene Arten von Scheibenwischerarmen mit einem Scheibenwischer verbunden werden können,
und dieselbe mehrfache Scheibenwischer-Verbindungsstruktur kann auf verschiedenen Scheibenwischerarmen verwendet werden.

2. Verbindungsstruktur nach Anspruch 1, wobei ein elastischer Eingriffhaken (14) auf einer Vorderseite der Querbohrung (11) des Hauptsitzes (1) konfiguriert ist, und eine Öffnung (22) auf einer Oberkante der vorderen Abdeckung (2) konfiguriert ist, wobei ein Knickhaken (23) auf der Öffnung (2) konfiguriert ist, so dass die vordere Abdeckung (2) durch Knicken des Knickhakens (23) mit dem Eingriffhaken (14) positioniert werden kann, sobald die vorstehenden Rippen (24) in die Gleitnut (12) eingreifen.

3. Verbindungsstruktur nach Anspruch 1, wobei ein Absatz (25) auf einer Bodenkante der vorderen Abdeckung (2) konfiguriert ist, so dass die vordere Abdeckung (2) durch den Absatz (25) positioniert werden kann, während sie am Vorderende des Hauptsitzes (1) befestigt wird.

4. Verbindungsstruktur nach Anspruch 1, wobei ein erhabenes Positionierungsteil (18) auf dem Hauptsitz (1) oberhalb jeder Gleitnut (17) konfiguriert ist und symmetrische Blockierbleche (33) auf einer Innenkante an der Rückseite der hinteren Abdeckung (3) konfiguriert sind, so dass das Einlegeblech (32) der hinteren Abdeckung (3) durch das Blockierblech (33) und das entsprechende erhabene Positionierungsteil (18) positioniert werden kann, während es in die entsprechende Gleitnut (17) eingefügt wird.

5. Verbindungsstruktur nach Anspruch 1, wobei ein Absatz (191) in einer geeigneten Position des Knickkanals (19) an jeder Seite einer Hinterkante des Hauptsitzes (1) konfiguriert ist, so dass das Knickelement (5) durch den Absatz (191) positioniert werden kann, der auf dem Knickkanal (19) konfiguriert ist, wenn die Rippe (53) in den Knickkanal (19) eingefügt wird.

## Revendications

1. Structure de connexion d'essuie-glace plurifonctionnel, comprenant:
un logement principal (1), configuré avec un trou en croix (11) sur une extrémité avant de celui-ci, une rainure coulissante symétrique (12) s'étendant obliquement vers l'intérieur étant respectivement configurée sur deux côtés dudit trou en croix (11), une rainure (15) étant configurée derrière ledit trou en croix (11), un trou de fixation (16) passé à travers le logement principal (1) étant configuré sur deux côtés de celui-ci au-dessous de ladite rainure (15),
une rainure coulissante (17) étant configurée derrière ledit trou de fixation (16), un canal de bouclage symétrique (19) étant respectivement configuré sur deux côtés d'un bord postérieur dudit logement principal (1), une partie de serrage (20) étant configurée sur un bord de fond dudit logement principal (1),
et une barre de bouclage 21 pour sa fixation à un logement de retenue (61) d'un essuie-glace (6) étant configurée dans une position appropriée d'un centre dudit bord de fond;
une couverture avant (2), configurée avec une nervure saillante inclinée (24) respectivement positionnée sur deux côtés d'une face interne de celle-ci,
ladite couverture avant (2) étant fixée à une extrémité avant dudit logement principal (1) après ladite nervure saillante (24) est accouplée avec ladite rainure coulissante (12) et glissée vers l'intérieur;
une couverture arrière (3), étant un cadre en forme de "Π", un bord de fond d'une partie verticale (31) de celle-ci étant plié de façon régulière vers l'intérieur pour former des feuilles d'incrustation symétriques (32), ladite couverture arrière (3) étant fixée sur un côté supérieur dudit logement principal (1) en insérant les feuilles d'incrustation (32) dans ladite rainure coulissante (17) dudit logement principal (1);
une couverture de trou (4), étant un cadre en forme de "Π", une section verticale (41) de laquelle est configurée avec une masse saillante circulaire (42) qui correspond audit trou de fixation (16) dudit logement principal (1), permettant que ladite couverture de trou (4) soit insérée dans ladite rainure (15) dudit logement principal (1) exactement, et que ladite masse saillante circulaire (42) soit insérée dans ledit trou de fixation (16) exactement; et
un élément de bouclage (5), étant un corps en forme de "Π", et une partie de raccordement concave (52) étant formée sur une section pliée après une section verticale (51) est étendue vers l'avant une longueur appropriée, une nervure symétrique (53) étant configurée sur une face interne respective de ladite section d'extension, ledit élément de bouclage (5) étant fixé sur un côté postérieur dudit logement principal (1) en insérant ladite nervure (53) dans ledit canal de bouclage (19);
de telle manière que quelques-uns desdits composants sont détachés de ladite structure de connexion, ou recombinés après le détachement conformément à de différents types de bras d'essuie-glace pendant l'utilisation afin de permettre que des types différents de bras d'essuie-glace puissent être accouplés à un essuie-glace, et la même structure de connexion d'essuie-glace multiple est capable d'être utilisée sur des bras d'essuie-glace différents.

2. Structure de connexion selon la revendication 1, où un crochet de raccordement élastique (14) est configuré sur une face avant dudit trou en croix (11) dudit logement principal (1), et une ouverture (22) sur un bord supérieur de ladite couverture avant (2), où un crochet de bouclage (23) est configuré sur ladite ouverture (2), permettant que ladite couverture avant (2) soit positionnée en attachant ledit crochet de bouclage (23) audit crochet de raccordement (14) après ladite nervure saillante (24) est liée avec ladite rainure coulissante (12).

3. Structure de connexion selon la revendication 1, où un échelon (25) est configuré sur un bord de fond de ladite couverture avant (2), permettant que ladite couverture avant (2) soit positionnée à travers ledit échelon (25) tandis qu'elle est fixée à ladite extrémité avant dudit logement principal (1).

4. Structure de connexion selon la revendication 1, où une partie de positionnement en relief (18) est configurée sur ledit logement principal (1) au-dessus de chacune desdites rainures coulissantes (17), et des feuilles de blocage symétriques (33) sont configurées sur un bord intérieur sur un côté postérieur de ladite couverture arrière (3), permettant que ladite feuille d'incrustation (32) de ladite couverture arrière (3) soit positionnée à travers ladite feuille de blocage (33) et la partie de positionnement en relief correspondante (18) tandis qu'elle est insérée dans ladite rainure coulissante correspondante (17).

5. Structure de connexion selon la revendication 1, où un échelon (191) est configuré sur une position appropriée du canal de bouclage (19) de chaque côté d'un bord postérieur dudit logement principal (1), permettant que ledit élément de bouclage (5) soit positionné à travers ledit pas (191) configuré sur ledit canal de bouclage (19) quand ladite nervure (53) est insérée dans ledit canal de bouclage (19).
